# EUROPEAN PATENT APPLICATION

(11) **EP 4 813 484 A1**
(43) Date of publication of application: **30.09.2026**
(21) Application number: 24894195.7
(22) Date of filing: 21.11.2024
(51) Int. Cl.: A63F 13/80, A63F 13/54, A63F 13/426, G09B 5/06, G09B 19/00

(54) **INFORMATION PROCESSING DEVICE, INFORMATION PROCESSING SYSTEM, AND COMPUTER PROGRAM**

(30) Priority: 22.11.2023 JP 2023198099
(71) Applicant: Neumo Inc., Tokyo 150-0022 (JP)
(72) Inventor: WAKABAYASHI, Ryosei, Tokyo 150-0022 (JP); TAMAKOSHI, Hiroki, Tokyo 150-0022 (JP); YAMADA, Masashi, Tokyo 150-0022 (JP)
(74) Representative: Gunzelmann, Rainer
(86) International application number: PCT/JP2024/041232
(87) International publication number: WO 2025/110204

(57) **Abstract**

An information processing device 1 includes an arithmetic part 8 for evaluating an input operation of a user, wherein the arithmetic part acquires trajectory data M1 corresponding to a virtual target, calculates a first coordinate G1 corresponding to the trajectory data, calculates, based on the input operation of the user, at every predetermined timing, a second coordinate G2 corresponding to an input trajectory K1 which has been input to an input part 2 so as to conform to the trajectory data, calculates a degree of matching between the first coordinate and the second coordinate, generates, based on audio, first feedback information F1, an output state of which is adjusted in accordance with the degree of matching, and causes an output part 3 to output the first feedback information, and when the degree of matching satisfies a predetermined condition, generates second feedback information representing an evaluation of the input operation to the user, and causes the output part to output the second feedback information.

## Description

### FIELD

The present disclosure relates to an information processing device, an information processing system, and a computer program for training hearing-based physical functions of a user, for example, for training brain functions through hearing.

### BACKGROUND

The technology shown in FIGS. 1 to 18 did not exist. Further, Patent Literature 1 proposes an information processing device which acquires information of user operation contents and provides feedback information to the user. According to the technology described in Patent Literature 1, a predetermined action of the user is detected based on the information of the user operation contents, and depending on the content of the predetermined action, the timing for providing feedback information from the time of detection can be calculated, and the feedback information can be output at the calculated timing.

### [CITATION LIST]

### [PATENT LITERATURE]

[PTL 1] Japanese Unexamined Patent Publication (Kokai) No. 2024-109398

### [NON-PATENT LITERATURE]

[NPL 1]
"Audiomotor Perceptual Training Enhances Speech Intelligibility in Background Noise," Jonathon P. Whitton, Kenneth E. Hancock, Jeffrey M. Shannon, Daniel B. Polley, Current Biology, 11.6th, 2017

### SUMMARY

### [TECHNICAL PROBLEM]

In order to train physical functions based on hearing of a user, it is necessary for the user to perform operations based on hearing. The technology described in Patent Literature 1 provides feedback information when it is determined that a predetermined action has been detected, but is not intended to be used to train physical functions of a user based on hearing.

An object of the present invention is to provide an information processing device, an information processing system, and a computer program which are intended for training physical functions based on hearing of a user, and which are capable of performing, for example, brain function training through hearing.

### [SOLUTION TO PROBLEM]

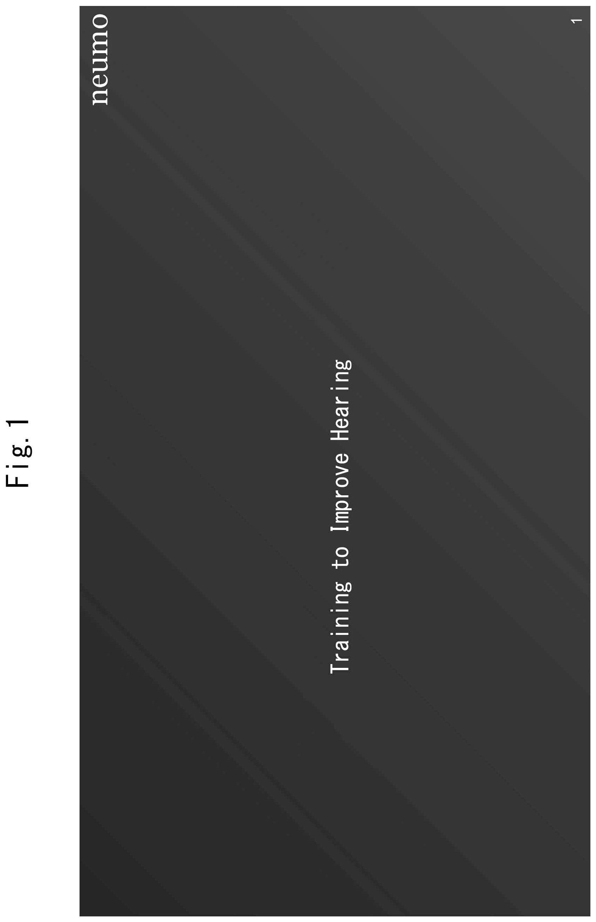

In order to achieve the above object, an information processing system according to an embodiment of the present invention has the functions described in FIGS. 1 to 18. Further, the embodiment of the present invention provides an information processing device, comprising an arithmetic part for evaluating an input operation of a user, wherein the arithmetic part acquires trajectory data corresponding to a virtual target, calculates a first coordinate corresponding to the trajectory data, calculates, based on the input operation of the user, at every predetermined timing, a second coordinate corresponding to an input trajectory which has been input to an input part so as to conform to the trajectory data, calculates a degree of matching between the first coordinate and the second coordinate, generates, based on audio, first feedback information, an output state of which is adjusted in accordance with the degree of matching, and causes an output part to output the first feedback information, and when the degree of matching satisfies a predetermined condition, generates second feedback information representing an evaluation of the input operation to the user, and causes the output part to output the second feedback information.

### [ADVANTAGEOUS EFFECTS OF INVENTION]

According to the present invention, physical function training based on hearing of a user, for example, brain function training through hearing, can be performed.

### BRIEF DESCRIPTION OF DRAWINGS

FIG. 1 is a view showing an overview (1) of an information processing system according to an embodiment of the present invention.
FIG. 2 is a view showing an overview (2) of an information processing system according to an embodiment of the present invention.
FIG. 3 is a view showing an overview (3) of an information processing system according to an embodiment of the present invention.
FIG. 4 is a view showing an overview (4) of an information processing system according to an embodiment of the present invention.
FIG. 5 is a view showing an overview (5) of an information processing system according to an embodiment of the present invention.
FIG. 6 is a view showing an overview (6) of an information processing system according to an embodiment of the present invention.
FIG. 7 is a view showing an overview (7) of an information processing system according to an embodiment of the present invention.
FIG. 8 is a view showing an overview (8) of an information processing system according to an embodiment of the present invention.
FIG. 9 is a view showing an overview (9) of an information processing system according to an embodiment of the present invention.
FIG. 10 is a view showing an overview (10) of an information processing system according to an embodiment of the present invention.
FIG. 11 is a view showing an overview (11) of an information processing system according to an embodiment of the present invention.
FIG. 12 is a view showing an overview (12) of an information processing system according to an embodiment of the present invention.
FIG. 13 is a view showing an overview (13) of an information processing system according to an embodiment of the present invention.
FIG. 14 is a view showing an overview (14) of an information processing system according to an embodiment of the present invention.
FIG. 15 is a view showing an overview (15) of an information processing system according to an embodiment of the present invention.
FIG. 16 is a view showing an overview (16) of an information processing system according to an embodiment of the present invention.
FIG. 17 is a view showing an overview (17) of an information processing system according to an embodiment of the present invention.
FIG. 18 is a view showing an overview (18) of an information processing system according to an embodiment of the present invention.
FIG. 19 is a block diagram showing the configuration of an information processing system according to an embodiment of the present invention.
FIG. 20 is a view showing an example of the trajectory data displayed on a display part.
FIG. 21 is a view detailing a procedure for calculating a degree of matching between a first coordinate and a second coordinate.
FIG. 22 is a view showing a state in which feedback information is output.
FIG. 23 is a flowchart showing the flow of processing executed in the information processing device.

### DETAILED DESCRIPTION OF THE INVENTION

Overviews of an information processing system according to an embodiment of the present invention will be described below.

FIG. 1 is a view showing an overview (1) of an information processing system according to an embodiment of the present invention.

An overview (1) of an information processing system according to an embodiment of the present invention is as shown in FIG. 1.

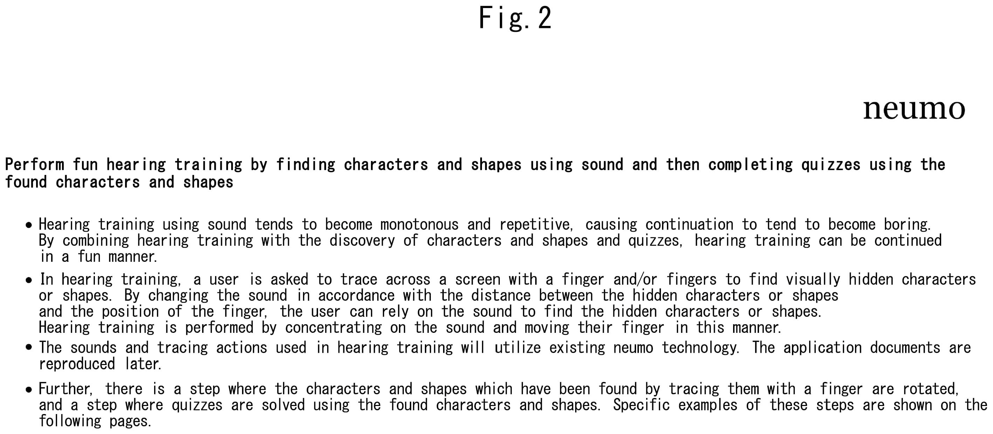

FIG. 2 is a view showing an overview (2) of the information processing system according to the embodiment of the present invention.

An overview (2) of the information processing system according to the embodiment of the present invention is as shown in FIG. 2.

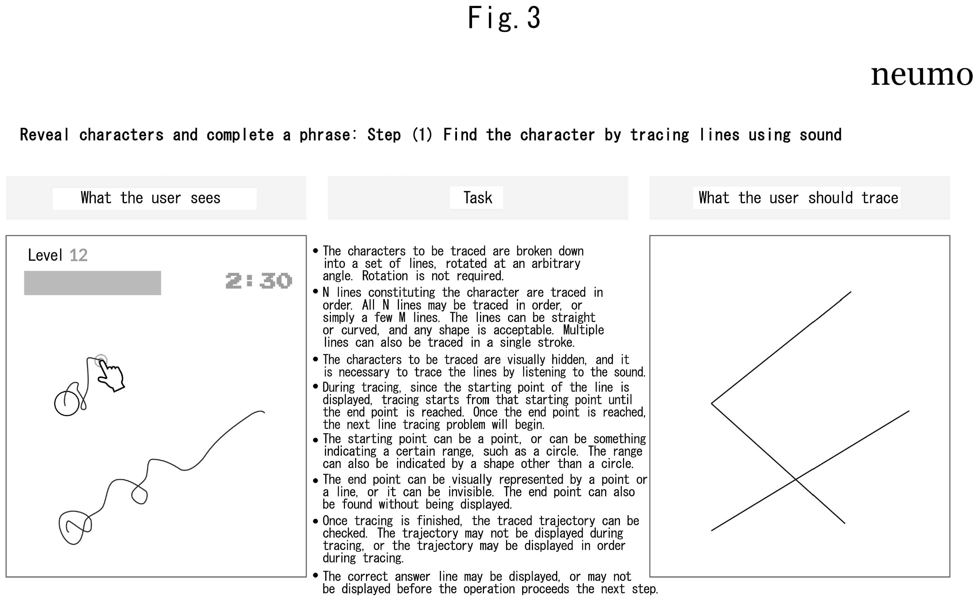

FIG. 3 is a view showing an overview (3) of the information processing system according to the embodiment of the present invention.

An overview (3) of the information processing system according to the embodiment of the present invention is as shown in FIG. 3.

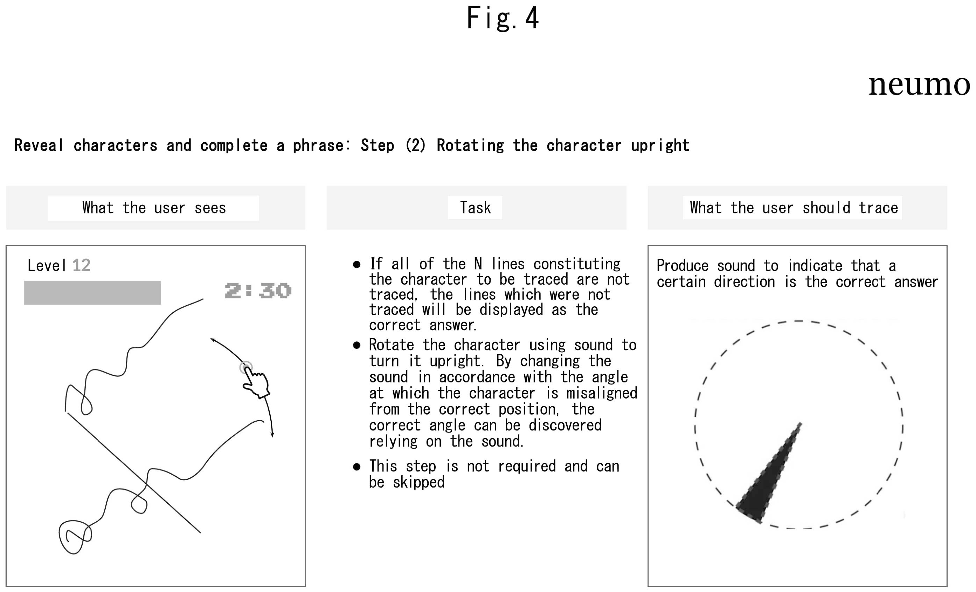

FIG. 4 is a view showing an overview (4) of the information processing system according to the embodiment of the present invention.

An overview (4) of the information processing system according to the embodiment of the present invention is as shown in FIG. 4.

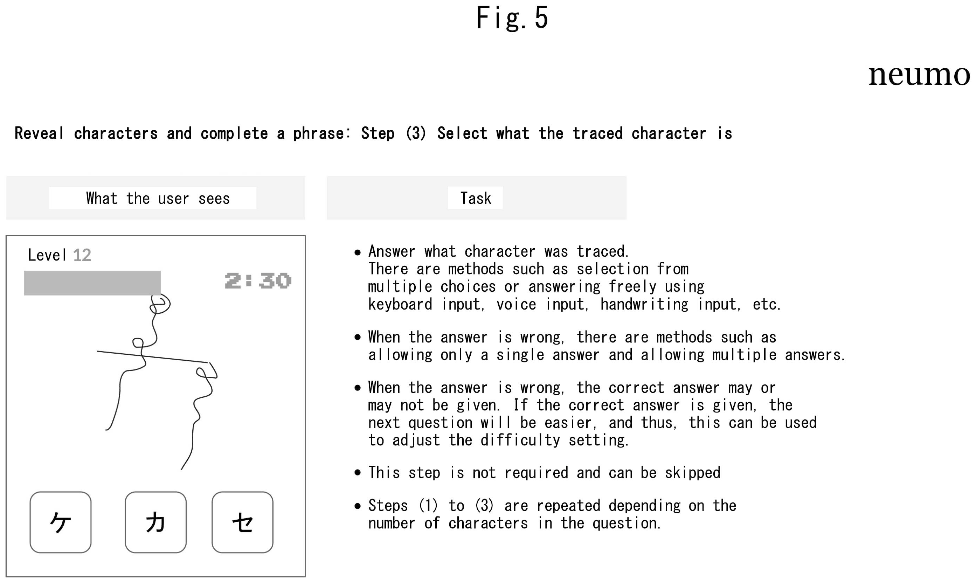

FIG. 5 is a view showing an overview (5) of the information processing system according to the embodiment of the present invention.

An overview (5) of the information processing system according to the embodiment of the present invention is as shown in FIG. 5.

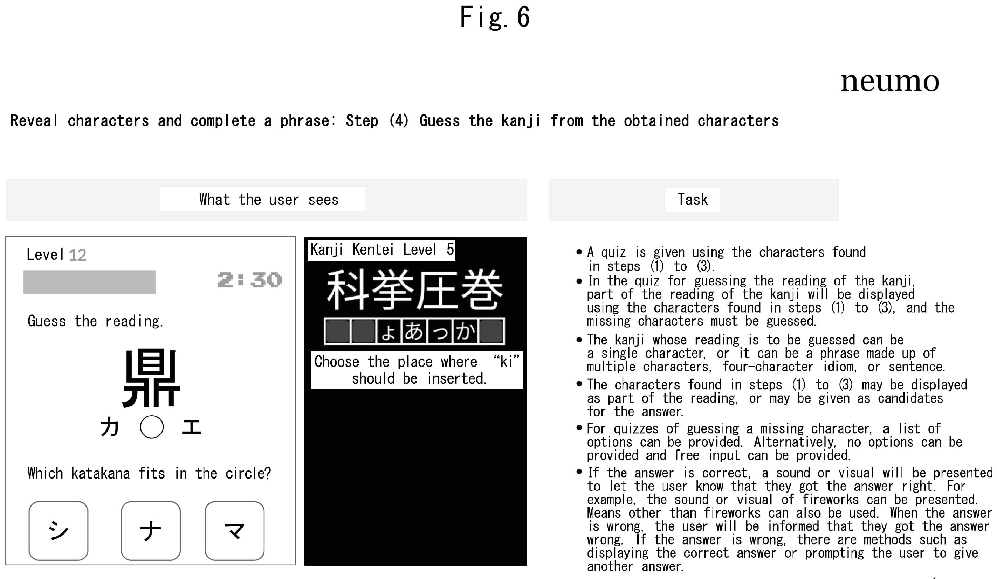

FIG. 6 is a view showing an overview (6) of the information processing system according to the embodiment of the present invention.

An overview (6) of the information processing system according to the embodiment of the present invention is as shown in FIG. 6.

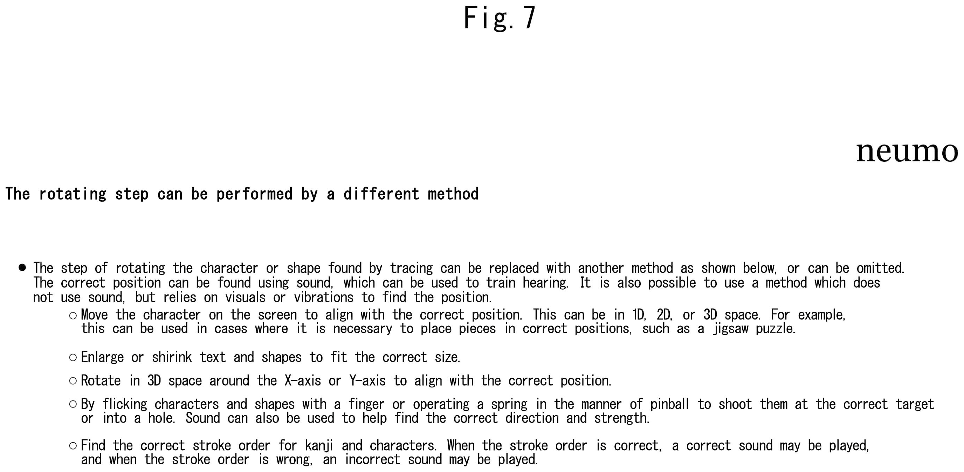

FIG. 7 is a view showing an overview (7) of the information processing system according to the embodiment of the present invention.

An overview (7) of the information processing system according to the embodiment of the present invention is as shown in FIG. 7.

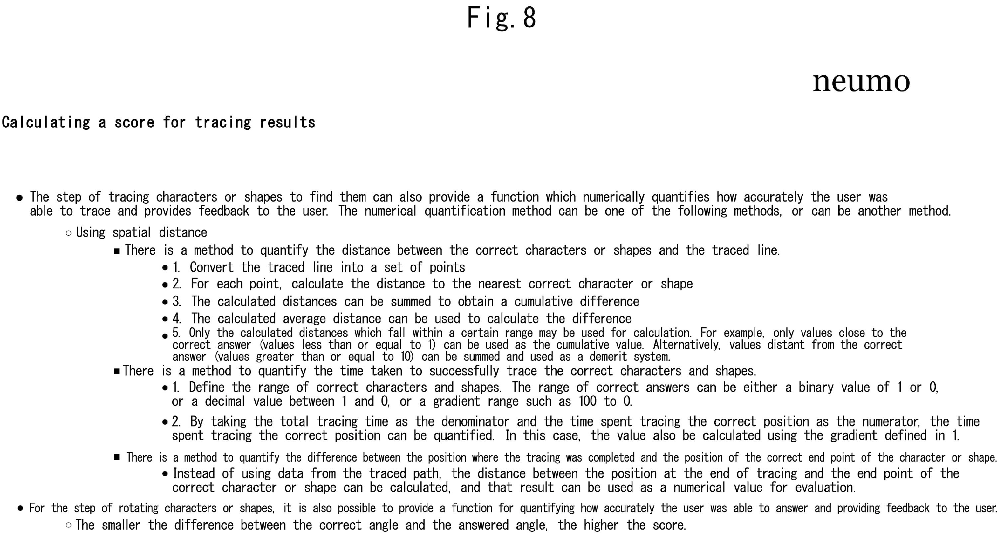

FIG. 8 is a view showing an overview (8) of the information processing system according to the embodiment of the present invention.

An overview (8) of the information processing system according to the embodiment of the present invention is as shown in FIG. 8.

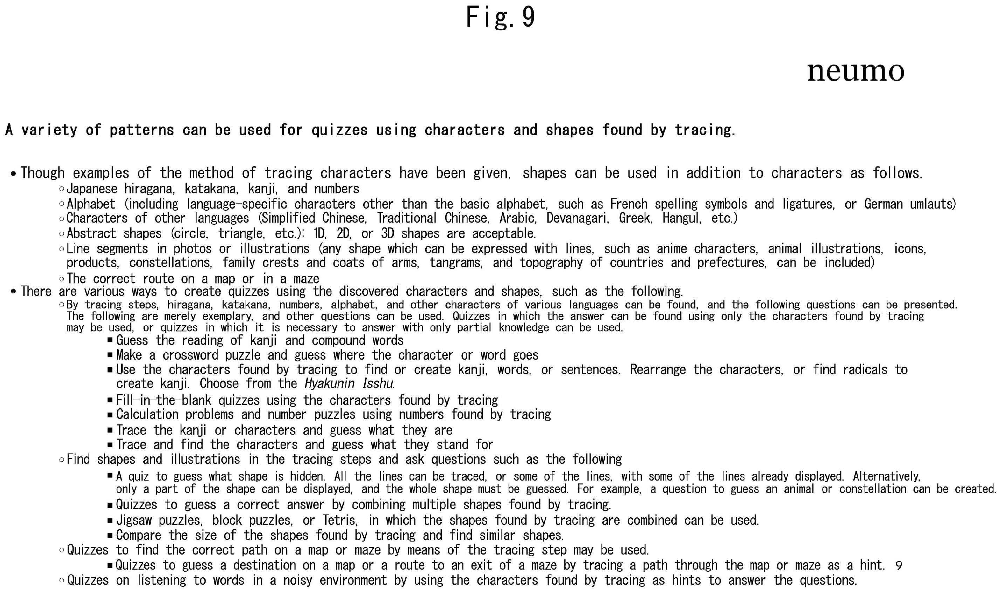

FIG. 9 is a view showing an overview (9) of the information processing system according to the embodiment of the present invention.

An overview (9) of the information processing system according to the embodiment of the present invention is as shown in FIG. 9.

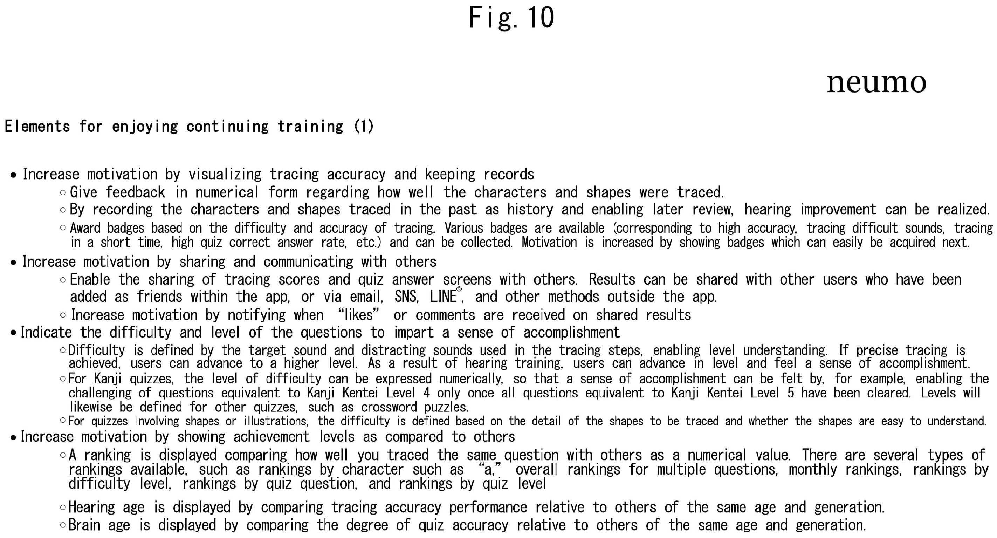

FIG. 10 is a view showing an overview (10) of the information processing system according to the embodiment of the present invention.

An overview (10) of the information processing system according to the embodiment of the present invention is as shown in FIG. 10.

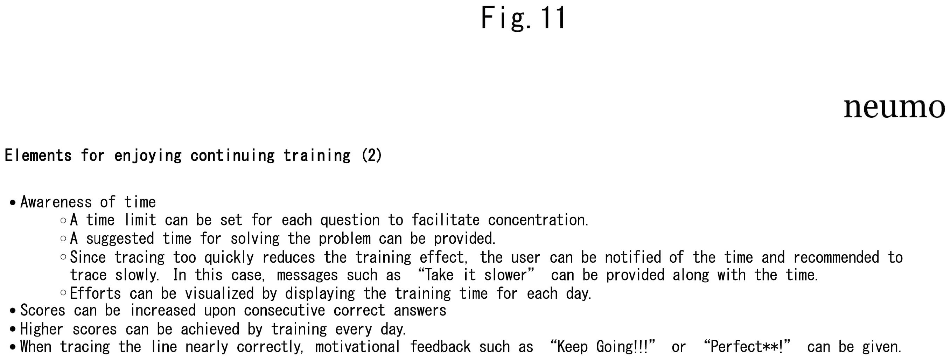

FIG. 11 is a view showing an overview (11) of the information processing system according to the embodiment of the present invention.

An overview (11) of the information processing system according to the embodiment of the present invention is as shown in FIG. 11.

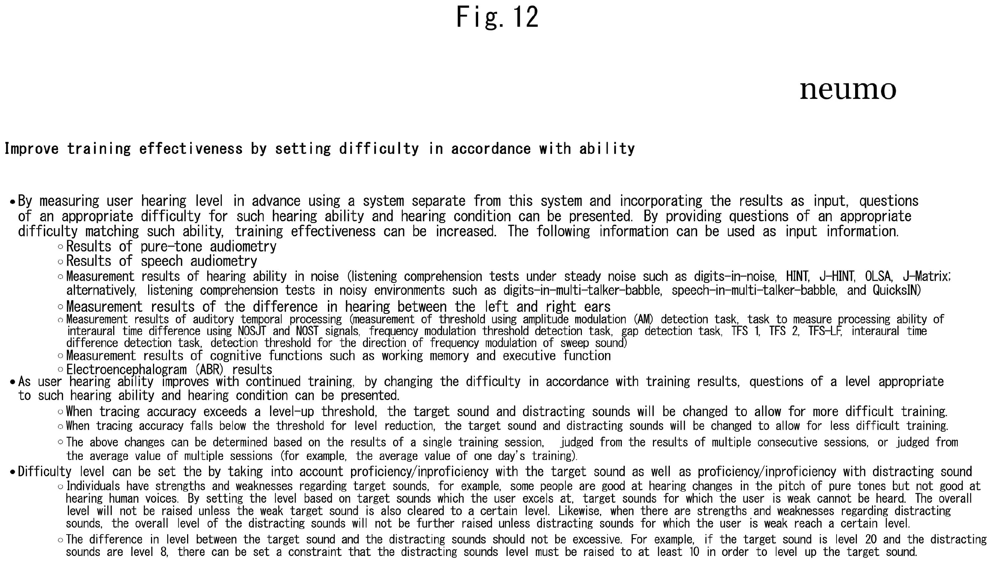

FIG. 12 is a view showing an overview (12) of the information processing system according to the embodiment of the present invention.

An overview (12) of the information processing system according to the embodiment of the present invention is as shown in FIG. 12.

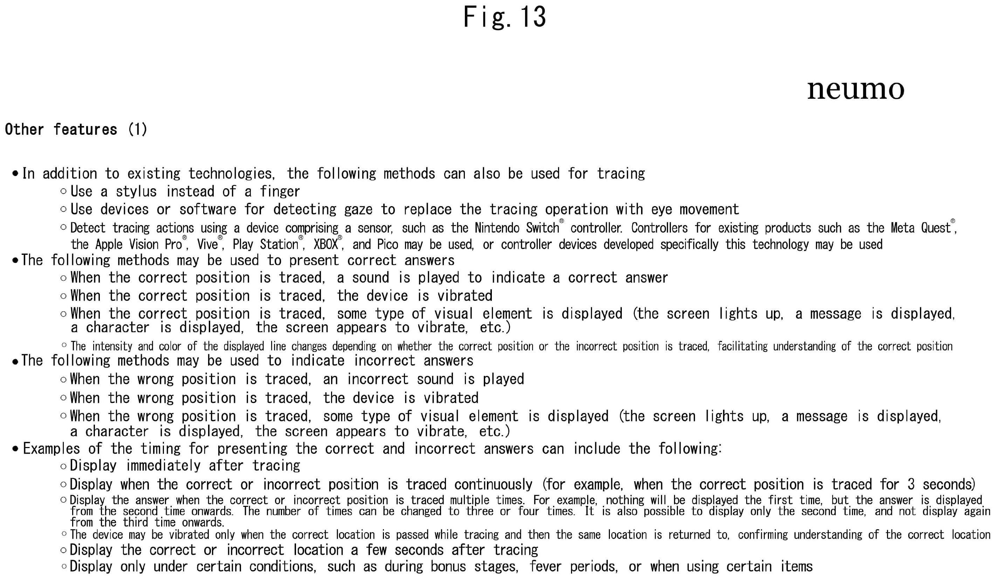

FIG. 13 is a view showing an overview (13) of the information processing system according to the embodiment of the present invention.

An overview (13) of the information processing system according to the embodiment of the present invention is as shown in FIG. 13.

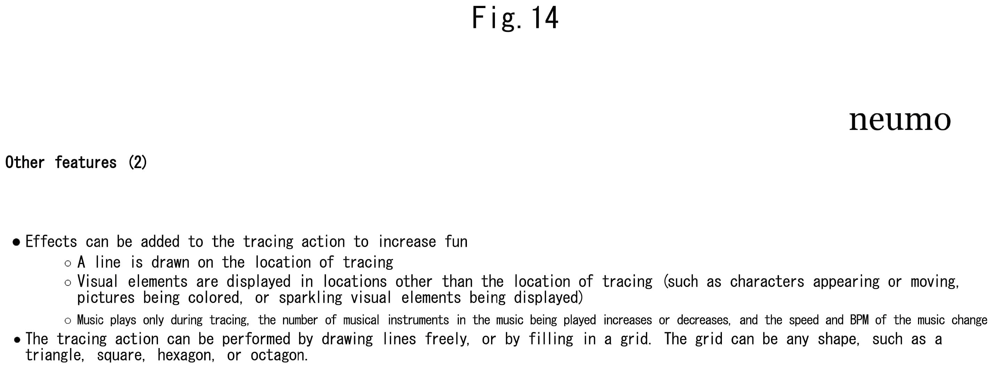

FIG. 14 is a view showing an overview (14) of the information processing system according to the embodiment of the present invention.

An overview (14) of the information processing system according to the embodiment of the present invention is as shown in FIG. 14.

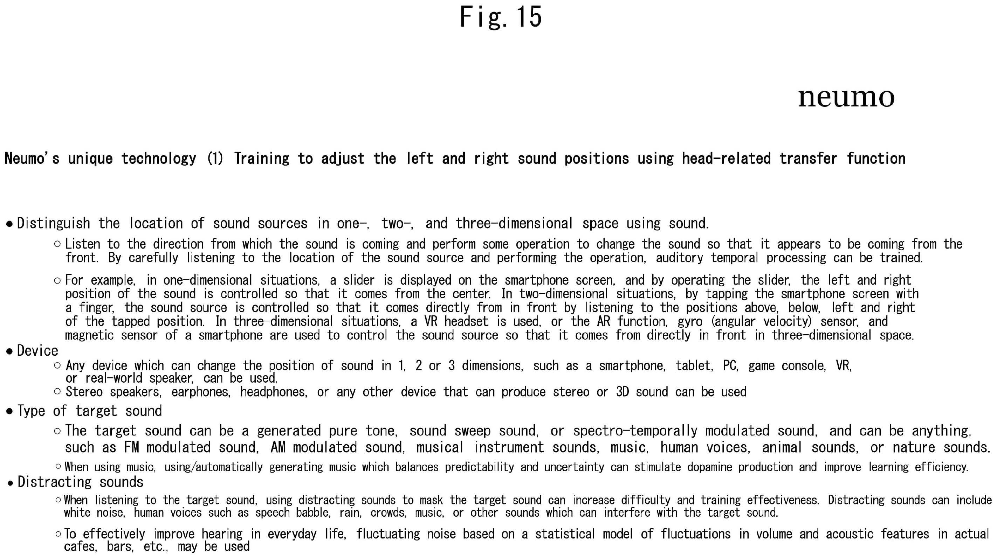

FIG. 15 is a view showing an overview (15) of the information processing system according to the embodiment of the present invention.

An overview (15) of the information processing system according to the embodiment of the present invention is as shown in FIG. 15.

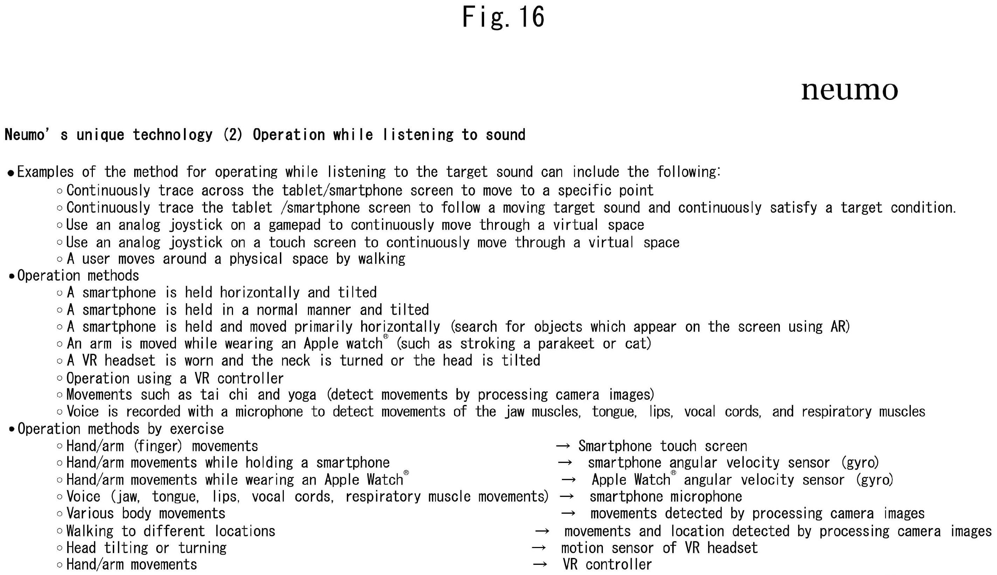

FIG. 16 is a view showing an overview (16) of the information processing system according to the embodiment of the present invention.

An overview (16) of the information processing system according to the embodiment of the present invention is as shown in FIG. 16.

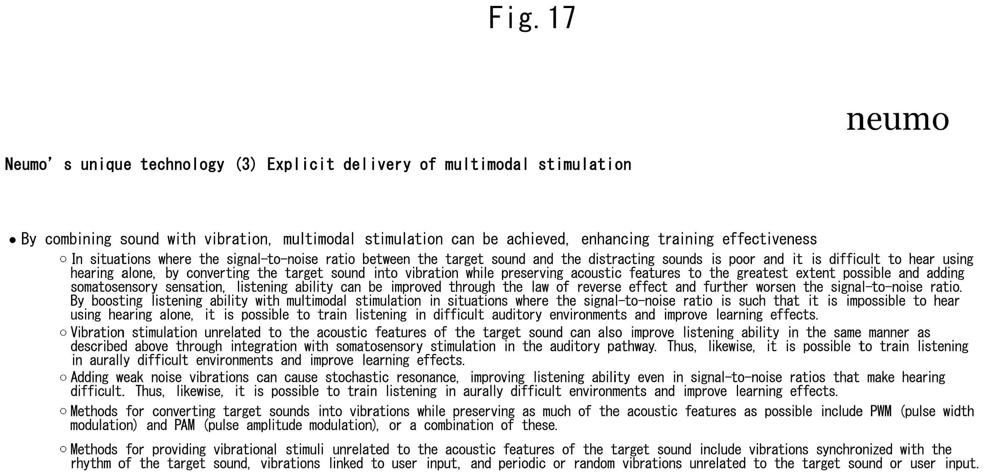

FIG. 17 is a view showing an overview (17) of the information processing system according to the embodiment of the present invention.

An overview (17) of the information processing system according to the embodiment of the present invention is as shown in FIG. 17.

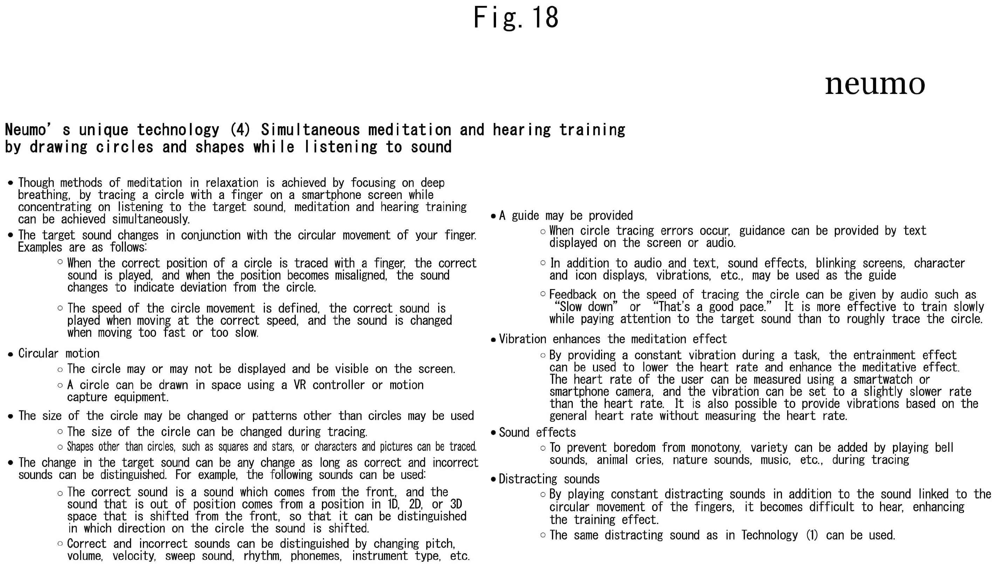

FIG. 18 is a view showing an overview (18) of the information processing system according to the embodiment of the present invention.

An overview (18) of the information processing system according to the embodiment of the present invention is as shown in FIG. 18.

Though an embodiment of the present invention has been described above, the present invention is not limited to the above-described embodiment, and modifications, improvements, etc., within the scope in which the object of the present invention can be achieved are included in the present invention.

For example, the series of processes described above can be executed by hardware or software. In other words, the functional configurations of FIGS. 1 to 18 are merely illustrative and are not particularly limited. Specifically, it is sufficient that the information processing system has the functionality to execute the series of processes described above as a whole, and the functional blocks used for realizing these functions are not particularly limited to the examples of FIGS. 1 to 18. Furthermore, the locations of the functional blocks and databases are not particularly limited to those of FIGS. 1 to 18 and may be arbitrary. For example, at least some of the functional blocks and databases required to execute the various processes may be transferred to a user terminal or the like. Conversely, the functional blocks and databases of the user terminal may be transferred to a server or the like. Furthermore, a single functional block may be configured as hardware alone, software alone, or a combination thereof.

When the series of processes is executed by software, the programs constituting the software are installed on a computer or the like from a network or a recording medium. The computer may be a computer incorporated into dedicated hardware. The computer may also be a computer which is capable of executing various functions by installing various programs, for example, a server, a general-purpose smartphone, or a personal computer.

A recording medium containing such a program may be constituted by a removable medium (not illustrated) that is distributed separately from the device body in order to provide the program to users, etc., or may be constituted by a recording medium which is pre-installed in the device body and provided to users, etc. The computer program for executing the processing of each part of the processor constituting an arithmetic part 8 of an information processing system S may be provided in a form recorded on a computer-readable recording medium such as a semiconductor memory, a magnetic recording medium, or an optical recording medium. The computer program may also be provided as a program product. The specific configuration of the information processing system will be described below.

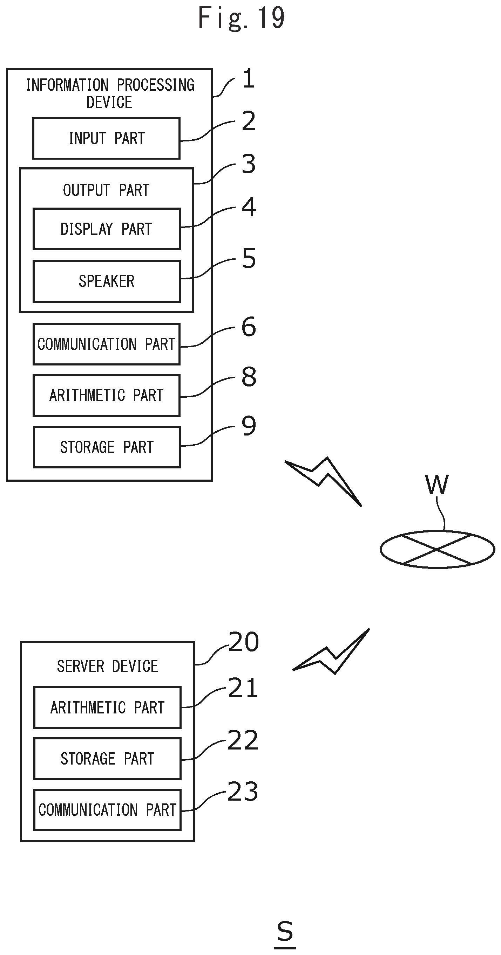

As shown in FIG. 19, the information processing system S comprises an information processing device 1 which is operated by a user, and a server device 20 which is communicatively connected via a network W. The information processing system S is configured so as to perform training of the physical functions, including hearing, of a user based on an input operation of the user. In the information processing system S, at least one of the information processing devices 1 and the server device 20 is configured so as to evaluate the input operation of the user.

The server device 20 is constituted by, for example, an information communication device such as a personal computer on which computer programs can be installed. The server device 20 comprises an arithmetic part 21 for executing processes necessary for calculations and various controls. The arithmetic part 21 is constituted by at least one hardware processor such as a CPU (Central Processing Unit). The arithmetic part 21 may be realized by hardware (including circuitry) such as an LSI (Large Scale Integration), an ASIC (Application-Specific Integrated Circuit), an FPGA (Field-Programmable Gate Array), or a GPU (Graphics Processing Unit), or may be realized by a combination of software and hardware.

The server device 20 comprises a storage part 22 for storing data and computer programs necessary for calculations and control, as well as a database including training questions and answers. The storage part 22 is constituted by a non-transitory storage medium such as a hard disk drive (HDD) or flash memory. The server device 20 comprises a communication part 23 which is communicatively connected to the network W. The communication part 23 is constituted by, for example, a communication device which is communicatively connected to the network W by wire or wirelessly. The arithmetic part 21 communicates with the information processing device 1 via the network W and transmits training data.

The arithmetic part 21 may perform arithmetic processing based on the training data and cause the information processing device 1 to output the arithmetic results via the network W. The arithmetic part 21 may perform arithmetic processing in cooperation with the information processing device 1 via the network W. The arithmetic part 21 may transmit updated computer programs to the information processing device 1.

The information processing device 1 is constituted by an information communication device, such as a smartphone or a personal computer, on which computer programs can be installed. The information processing device 1 may be a device specifically configured to train the physical functions of a user. The information processing device 1 comprises an arithmetic part 8 for performing processing necessary for calculations and various controls. The arithmetic part 8 is constituted by at least one hardware processor, such as a CPU. The arithmetic part 8 may be realized by hardware, such as an LSI, ASIC, FPGA, or GPU, or may be realized by a combination of software and hardware.

The information processing device 1 comprises a storage part 9 for storing data and computer programs necessary for calculations and control, as well as a database containing training questions and answers (which will be described later). The storage part 9 is constituted by a non-transitory storage medium such as a hard disk drive or flash memory. The information processing device 1 comprises a communication part 6 which is communicatively connected to the network W. The communication part 6 is constituted by, for example, a communication device which is communicatively connected to the network W via wire or wirelessly. The arithmetic part 8 communicates with the server device 20 via the network W to receive training data.

The information processing device 1 comprises an input part 2 for accepting user operations. The input part 2 is constituted by a device with which user input operations can be input, such as a touch panel, touchpad, mouse, or keyboard. The input part 2 is provided in the information processing device 1. The input part 2 may be constituted by a device which is communicatively connected to the information processing device 1 via wire or wirelessly. The input part 2 may be constituted by a controller comprising a cross key or joystick, or a controller based on an acceleration sensor, which detects the body movements of a user. Any sensor which is capable of detecting the body movements of a user can be used as the acceleration sensor. The input part 2 may be constituted by a camera, and the arithmetic part 8 may perform image recognition on imaging data for inputting the movements of the user. The input part 2 may be configured so as to receive as input audio based on speech of a user, recognize the content of the speech, and perform an input operation. The input part 2 may be configured so as to receive as input specific audio information, recognize the content of the audio information generated based on a combination of one or more parameters, such as frequency, acoustic power, acoustic spectrum, and emission pattern, and perform an input operation.

The input part 2 may be constituted by a motion capture device for recognizing markers attached to the body of a user and detecting the body movements of the user. The input part 2 may be configured so as to detect the body of a user based on a pressure sensor or a vibration sensor. The input part 2 may be configured so as to accept input operations based on a device which acquires signals from the body of a user non-invasively and/or invasively, such as an electromyography (EMG), an electroencephalogram (EEG), or an electrooculography (EOG). The input part 2 may be constituted by any device which can accept two-dimensional or three-dimensional input operations from the user.

The information processing device 1 comprises an output part 3 for outputting information. The output part 3 is provided in the information processing device 1. The output part 3 may be constituted by a device which is communicatively connected to the information processing device 1. The output part 3 comprises, for example, a display part 4 for outputting image-based information. The display part 4 is constituted by a display device such as a liquid crystal display or an organic EL (Electro-Luminescence) display. The display part 4 may be constituted by a touch panel which can accept input operations. In this case, the display part 4 also functions as the input part 2. The display part 4 is communicatively connected to the information processing device 1 and may be constituted by a projector which can project images or a head-mounted display device that is worn on the head of a user.

The output part 3 comprises a speaker 5 for outputting sound. The speaker 5 outputs sound-based information. The output part 3 may be constituted by a device for providing stimulation to the body of a user non-invasively and/or invasively. The output part 3 may be constituted by a device for providing physical stimulation and/or neural stimulation based on one or more combinations of visual stimulation, auditory stimulation, vibration stimulation, olfactory stimulation, taste stimulation, temperature stimulation, electrical stimulation, magnetic stimulation, gravitational stimulation, acceleration stimulation, pressure stimulation, brain wave stimulation, balance stimulation, muscle stimulation, visceral stimulation, light stimulation, sound stimulation, visual cortex stimulation, auditory cortex stimulation, intestinal bacteria administration, drug administration, etc.

The processing for training a user executed in the information processing device 1 will be described below. In the present embodiment, processing in which the arithmetic part 8 evaluates an input operation performed by a user on a touch panel is exemplified. The arithmetic part 8 starts training in, for example, a state in which the trajectory of a virtual target is not displayed on the display part 4. In training, the user performs an input operation in which the user traces the trajectory of the virtual target with their finger on the display part 4 to estimate the trajectory of the virtual target. The arithmetic part 8 compares the input trajectory input based on the input operation of the user with the trajectory of the virtual target, scores the accuracy of the input operation, and provides feedback to the user. The processing of the arithmetic part 8 may be executed by the server device 20.

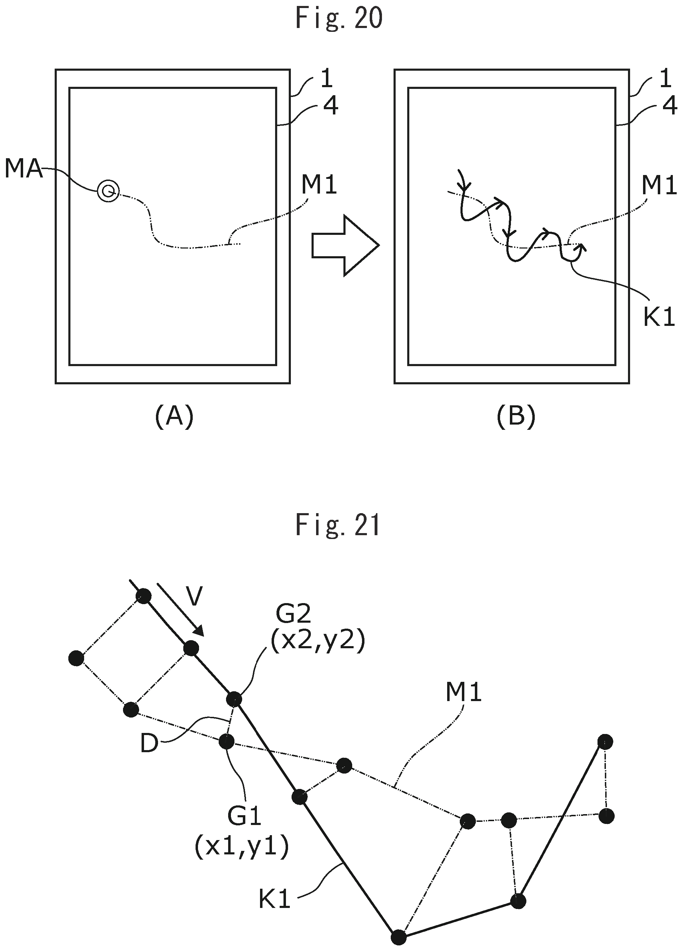

As shown in FIG. 20, the display part 4 is constituted by a touch panel for accepting input operations for training of a user. The arithmetic part 8 launches an application for training based on the input operation of the user. The arithmetic part 8 acquires trajectory data M1 corresponding to a virtual target from the storage part 9. The arithmetic part 8 may also acquire the trajectory data M1 from the server device 20. The virtual target is represented by, for example, characters, drawings, etc., based on multiple linear trajectories. The arithmetic part 8 suggests the virtual target to the user by, for example, outputting a quiz-style question to the output part 3. The trajectory data M1 is data indicating the spatial position of the virtual target. The trajectory data M1 may be fixed over time or may be dynamic over time. The trajectory data M1 may also change over time. The arithmetic part 8 executes arithmetic processing to match the trajectory data M1 of the virtual target with coordinates on the display part 4. The arithmetic part 8 calculates a first coordinate corresponding to the trajectory data. The arithmetic part 8 converts the first coordinate into data corresponding to a position on the screen of the display part 4, and causes it to correspond to the display part 4. The arithmetic part 8 calculates a second coordinate in the virtual space corresponding to the input trajectory displayed on the display part 4 based on the input operation input to the input part 2. In the illustrated example, the first coordinate and the second coordinate are, for example, two-dimensional coordinates. The first coordinate and the second coordinate may also be coordinates of two or more dimensions.

The arithmetic part 8 calculates a plurality of first coordinates which conform to the trajectory data M1. The arithmetic part 8 does not display the trajectory data M1 of the virtual target based on the first coordinate on the display part 4, and outputs instruction information to the output part 3, instructing the user to perform an input operation that causes the user to trace the trajectory data M1 of the virtual target. The arithmetic part 8 may not only not display the trajectory data M1 on the display part 4, but may also display at least a part of the trajectory data M1 on the display part 4. The arithmetic part 8 may display at least a part of the trajectory data M1 on the display part 4 when a predetermined condition is met, such as at a predetermined timing from the start of the input operation, within a predetermined time from the start of the input operation, or when a predetermined input operation is performed. The arithmetic part 8 may switch between states in which at least a part of the trajectory data M1 is and is not displayed on the display part 4. The instruction information may be output in any form, such as text information, graphic information, audio information, or electrical stimulation, which can instruct the user to perform an input operation. The arithmetic part 8 may generate information MA indicating the start position of the trajectory data M1 and output it from the output part 3. The start position may be the beginning of the trajectory data M1, or any position other than the beginning of the trajectory data M1. The arithmetic part 8 may not output information MA indicating the start position of the trajectory data M1 from the output part 3. After displaying information MA indicating the beginning of the trajectory data M1, the arithmetic part 8 may cause it to disappear from the output part 3 after a predetermined time has elapsed. The user begins the input operation by tracing the trajectory data M1 on the display part 4 using an input means such as finger(s) or stylus(styli). The user may begin the input operation from any position of the trajectory data M1. The user continuously and/or discretely traces the display part 4 to generate an input trajectory. The arithmetic part 8 displays an input trajectory K1 which has been input based on the input operation of the user on the display part 4. The arithmetic part 8 may not only display the input trajectory K1 on the display part 4, but may also not display the input trajectory K1 on the display part 4. The arithmetic part 8 may display at least a part of the input trajectory K1 on the display part 4. The arithmetic part 8 may switch between states in which at least a part of the input trajectory K1 is and is not displayed on the display part 4. The input operation may be performed not only by tracing the display part 4, but also by other methods based on the configuration of the input part 2.

As shown in FIG. 21, the arithmetic part 8 generates at a predetermined interval the second coordinate G2 of the input trajectory K1 input to the input part 2 based on the input operation of the user so as to conform to the trajectory data M1. The predetermined interval may be, for example, the sampling period for accepting the input operation, or may be continuous. The second coordinate G2 indicates a spatial position in virtual space relative to the first coordinate G1. The arithmetic part 8 may generate the second coordinate G2 continuously or discretely. The arithmetic part 8 may calculate an input velocity V of the input operation. The arithmetic part 8 calculates the input velocity V based on, for example, the path length of the input trajectory K1 input per unit time. The arithmetic part 8 calculates the input velocity V using the average, median, maximum, minimum, etc., of the input velocity over a predetermined period. The arithmetic part 8 generates image data of the input trajectory K1 based on the second coordinate G2 and displays it on the display part 4. The arithmetic part 8 generates image data of the input trajectory K1 based on, for example, a line diagram.

The arithmetic part 8 calculates the degree of matching, which indicates the spatial relationship between the first coordinate G1 and the second coordinate G2, at each predetermined timing while the input operation is being performed. The degree of matching is a score indicating the degree to which the first coordinate G1 and the second coordinate G2 match. The arithmetic part 8 calculates the degree of matching based on, for example, a relative distance D between the first coordinate G1 and the second coordinate G2. The arithmetic part 8 calculates the degree of matching so that the smaller the distance D, the higher the degree of matching. The arithmetic part 8 may calculate the degree of matching based on a combination of one or more of the relative distance, relative angle, relative velocity, relative acceleration, etc., in the relationship between the first coordinate G1 and the second coordinate G2. The arithmetic part 8 may also calculate the degree of matching using other methods by which the relationship between the first coordinate G1 and the second coordinate G2 can be calculated. The arithmetic part 8 may calculate the degree of matching at a certain moment, or may calculate the degree of matching for each predetermined time interval based on the average, median, maximum, and minimum values.

The arithmetic part 8 generates feedback information indicating an evaluation of the input operation to the user in accordance with the degree of matching, and causes the output part 3 to output the feedback information. The arithmetic part 8 causes the output part 3 to output the feedback information based on, for example, a combination of at least one of audio information, text information, and image information. The arithmetic part 8 may output the feedback information from the output part 3 based on physical and/or neural stimulation based on a combination of one or more of visual stimulation, auditory stimulation, vibration stimulation, olfactory stimulation, taste stimulation, temperature stimulation, electrical stimulation, magnetic stimulation, gravitational stimulation, acceleration stimulation, pressure stimulation, brain wave stimulation, balance stimulation, muscle stimulation, visceral stimulation, light stimulation, sound stimulation, visual cortex stimulation, auditory cortex stimulation, administration of intestinal bacteria, drug administration, etc.

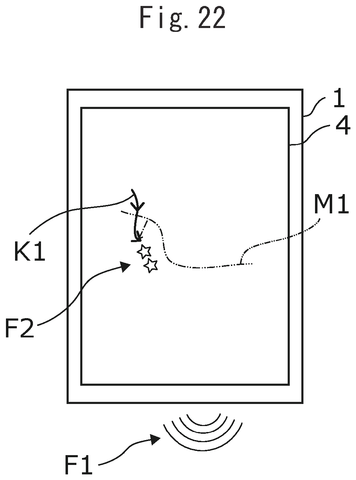

As shown in FIG. 22, the arithmetic part 8 causes the output part 3 to output first feedback information F1 based on audio information in accordance with the degree of matching. The arithmetic part 8 causes one or more pieces of the first feedback information F1 to be output midway between the start and end of the input of the input trajectory K1. The arithmetic part 8, for example, generates the first feedback information F1 based on audio, the output state of which is adjusted in accordance with the degree of matching, and causes the output part 3 to output the first feedback information F1. The arithmetic part 8, for example, outputs the first feedback information F1 based on audio information so that the sound level changes in accordance with the degree of matching. The first feedback information F1 based on audio information is generated using an alarm sound, language, etc. The arithmetic part 8 may, for example, generate the first feedback information F1 by adjusting sound-related parameters such as volume, frequency, and audio spectrum so that the first feedback information F1 sounds comfortable to the user. The arithmetic part 8, for example, outputs the first feedback information F1 so that the sound level increases as the degree of matching increases. The arithmetic part 8 generates the first feedback information F1 so that the sound level decreases as the degree of matching decreases. The arithmetic part 8 may not only adjust sound-related parameters in accordance with the degree of matching, but also adjust the output state of the first feedback information F1 based on an arbitrary method. The arithmetic part 8 outputs the first feedback information F1 at an arbitrary time interval. The arithmetic part 8 may output the first feedback information F1 continuously or intermittently. The arithmetic part 8 may generate the first feedback information F1 based on linguistic information. The arithmetic part 8 may generate the first feedback information F1 based on linguistic information for guiding the position, direction, and velocity of the input operation of the user so as to increase the degree of matching.

The arithmetic part 8 generates not only the first feedback information F1 based on audio information, but also second feedback information F2 for improving the effectiveness of training of the user based on the input operation, and outputs it to the display part 4. When, for example, the degree of matching satisfies a predetermined condition, the arithmetic part 8 generates the second feedback information F2 based on image information and outputs it to the display part 4. The arithmetic part 8 outputs one or more pieces of the second feedback information F2 midway from the start to the end of input of the input trajectory K1. For example, based on results of comparison between the degree of matching and a preset threshold, the arithmetic part 8 outputs the second feedback information F2 to the display part 4 when the predetermined condition that the degree of matching be greater than the threshold is satisfied. The arithmetic part 8 generates the second feedback information F2 based on one or more combinations of outputtable information, such as text information, graphic information, and audio information. The arithmetic part 8, for example, outputs the second feedback information F2 based on image information to the display part 4. The arithmetic part 8 increases the number of shapes, such as stars, displayed on the display part 4 as the degree of matching increases. The arithmetic part 8 generates second feedback information F2 for any number of shapes and outputs it to the display part 4. When the arithmetic part 8 generates second feedback information F2 including audio information, it may output the audio information from the speaker 5. The arithmetic part 8 may generate the second feedback information F2 based not only on shapes, but also on changes to the color of the entire screen, the color of a partial area of the screen, or the brightness of the screen. The arithmetic part 8 may change visual information, such as the thickness and color of the line of the input trajectory K1, in accordance with the output of the second feedback information F2. The arithmetic part 8 outputs the second feedback information F2 at an arbitrary time interval. The arithmetic part 8 may output the second feedback information F2 based on an arbitrary number of outputs and an output frequency. The arithmetic part 8 may output the second feedback information F2 based on an output number and an output frequency that the user can predict, or may output the second feedback information F2 based on an output number and an output frequency that the user cannot predict.

The arithmetic part 8 may provide a predetermined delay state from the timing at which the input operation is performed and output the second feedback information F2 to the output part 3. The timing at which the input operation is performed includes one or more timings in one input trajectory K1, such as the timing at which the input operation is performed at every predetermined sampling period, the timing at which the input operation is performed at every predetermined distance on the path of the input trajectory K1, or the timing at which the input operation is performed at every predetermined position and/or every predetermined region from the start position. The delay state includes the concept of a temporal and/or spatial delay after the timing at which the input operation is performed, such as a time delay from the input timing or a distance delay after moving an arbitrary distance from the input position.

The arithmetic part 8 may cause the output part 3 to output the second feedback information F2 at the timing when the input operation is performed (delay time=0). The arithmetic part 8 may cause the second feedback information to be output at an arbitrary quantity and frequency. The arithmetic part 8 may cause the second feedback information F2 to be output when the degree of matching reaches a maximum value. The arithmetic part 8 may cause the second feedback information F2 to be output when a predetermined time or a predetermined time range occurs while the input operation is being performed. The arithmetic part 8 may cause the second feedback information F2 to be output based on a delay time (seconds) that is 0 or greater. The arithmetic part 8 may cause the display part 4 to display the second feedback information F2 including image information based on the delay time, and may cause the speaker 5 to output the second feedback information F2 including audio information based on the delay time (seconds). The arithmetic part 8 may output the second feedback information F2 including image information and the second feedback information F2 including audio information at the same timing based on the same delay time, or may output them at different timings based on different delay times. The arithmetic part 8 may cause the second feedback information F2 to be output when a predetermined number of input operations, which marks a milestone of one task, are completed. The arithmetic part 8 may cause the second feedback information F2 to be output when the input trajectory K1 reaches a predetermined area. The arithmetic part 8 may cause the second feedback information F2 to be output when the trajectory data M1 reaches a predetermined area.

The arithmetic part 8 may cause the second feedback information F2 to be output when the degree of matching satisfies a predetermined condition, such as when the degree of matching reaches a predetermined value, when the degree of matching is within a predetermined range, when the degree of matching is outside a predetermined range, etc. The arithmetic part 8 may cause the second feedback information F2 to be output when the input trajectory K1 satisfies a predetermined condition, such as a predetermined coordinate value, shape, position, velocity, acceleration value, within a predetermined range, or outside a predetermined range, etc. The arithmetic part 8 may cause the second feedback information F2 to be output when a movable display image other than the input trajectory K1 changes to a predetermined color or shape at a predetermined timing.

The arithmetic part 8 may cause the second feedback information F2 to be output when a combination of one or more conditions is satisfied, such as when the user touches the input part 2, when the degree of contact with the input part 2 reaches a predetermined condition, when the user no longer touches the input part 2, or when an acceleration of a predetermined or greater value is applied to the information processing device 1 or the input part 2. The arithmetic part 8 may cause the second feedback information F2 to be output when the state of the input operation satisfies a predetermined condition, such as when the degree of matching is a predetermined high value, when the state of the input operation is within an inside region of a predetermined range, or when the state of the input operation is within an outside region of a predetermined range.

The arithmetic part 8 may cause the second feedback information F2 to be output when the user performs a specific operation, such as tapping on the display part 4, pressing with a pressure greater than or equal to a predetermined pressure, pressing with a pressure less than a predetermined pressure, releasing the operating means from the display part 4, or shaking the information processing device 1. The arithmetic part 8 may cause the second feedback information F2 to be output when the user utters a specific sound. The arithmetic part 8 may cause the second feedback information F2 to be output when the auditory function of the user has a specific performance, or when the arithmetic part 8 recognizes a response which exceeds or falls below the specific performance. The arithmetic part 8 may cause the second feedback information F2 to be output when the input trajectory K1 moves to a predetermined position. The arithmetic part 8 may cause the second feedback information F2 to be output when a calculated value, such as a score related to the input operation of the input trajectory K1, becomes a predetermined condition, such as a specific value, a value within a predetermined range, or outside the predetermined range. The arithmetic part 8 may cause the second feedback information F2 to be output when a specific sound is reproduced.

The arithmetic part 8 calculates the input velocity V of the input trajectory K1 at predetermined intervals and compares the input velocity with a threshold. The arithmetic part 8 may cause the output part 3 to output the second feedback information F2 including information for adjusting the input velocity V, based on the comparison results between the input velocity V and a preset threshold. It is generally known, based on test results and surveys such as subjective evaluations of hearing in daily life, that the effectiveness of training for auditory physical functions such as listening ability (for example, listening ability in noise (unit: dB)) is enhanced when a user is given feedback which stimulates dopamine production in the brain. For example, while the user is experiencing the first feedback information F1 based on audio information, the arithmetic part 8 may output the second feedback information F2 including information for guiding the input velocity V of the input operation to be slower than the threshold.

The arithmetic part 8 may cause the output part 3 to output the second feedback information F2 including the information for adjusting not only the input velocity V but also the position of the second coordinate G2 and the input acceleration. Examples of information for adjusting the input velocity V include information for delaying the input operation compared to the current time, information for speeding up the input operation compared to the current time, information for maintaining the input operation, etc. For example, when the arithmetic part 8 determines that the input trajectory K1 generated by the input operation of the user is within a predetermined range from the end of the trajectory data M1, it generates information notifying the user of the end and outputs it from the output part 3. The arithmetic part 8 may generate information notifying the user of the end at any timing and output it from the output part 3.

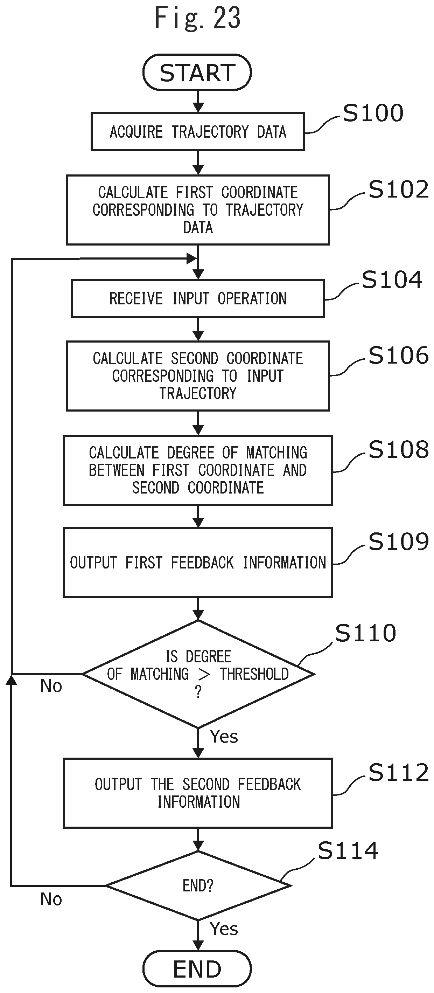

FIG. 23 is a flowchart showing the flow of processing of an information processing method executed in the information processing device 1. The information processing method is executed based on a computer program that can be installed on a computer mounted on the information processing device 1. The computer program causes an arithmetic part 8 of the information processing device 1 to execute the following processing.

The arithmetic part 8 acquires the trajectory data M1 corresponding to the virtual target from the storage part 9 or the server device 20 (S100). The arithmetic part 8 calculates the first coordinate G1 corresponding to the trajectory data M1 (S102). The arithmetic part 8 accepts an input operation from the user (S104). Based on the input operation, the arithmetic part 8 calculates, at predetermined intervals, the second coordinate G2 corresponding to the input trajectory K1 which has been input to the input part 2 so as to conform to the trajectory data (S106). The arithmetic part 8 calculates the degree of matching between the first coordinate G1 and the second coordinate G2 (S108). The arithmetic part 8 generates first feedback information based on sound, the output state of which is adjusted in accordance with the degree of matching, and causes the output part 3 to output the first feedback information (S109).

The arithmetic part 8 determines whether the calculated degree of matching is greater than a preset threshold (S110). When the degree of matching is equal to or less than the threshold, the arithmetic part 8 returns the processing to S104. When the degree of matching is greater than the threshold, the arithmetic part 8 generates feedback information and outputs it from the output part 3 (S112). The arithmetic part 8 determines whether an end condition is satisfied (S114), and when the end condition is satisfied, the processing ends. According to the technology described in Non-Patent Literature 1, feedback information is output after the user finishes tracing the trajectory data. Conversely, the information processing device 1 outputs the first feedback information F1 and the second feedback information F2 while the user is tracing the trajectory data, thereby enabling an evaluation of the input operation to be obtained in real time.

As described above, the information processing device 1 can perform physical function training based on hearing of a user, for example, brain function training through hearing. The information processing device 1 can perform brain function training through hearing of a user by determining the content of the input operation of the user, generating feedback information based on the determination result, and guiding the input operation. The information processing device 1 can train the physical function of the user based on hearing by generating the first feedback information F1 based on sound. The information processing device 1 can improve the effectiveness of the training of a user by generating second feedback information F2 to prompt the input operation to a predetermined state. The information processing device 1 can perform brain function training through hearing of a user by guiding the input operation based on the second feedback information F2.

### FIG. 1

### Training to Improve Hearing

### FIG. 2

Perform fun hearing training by finding characters and shapes using sound and then completing quizzes using the found characters and shapes
- Hearing training using sound tends to become monotonous and repetitive, causing continuation to tend to become boring. By combining hearing training with the discovery of characters and shapes and quizzes, hearing training can be continued in a fun manner.
- In hearing training, a user is asked to trace across a screen with a finger and/or fingers to find visually hidden characters or shapes. By changing the sound in accordance with the distance between the hidden characters or shapes and the position of the finger, the user can rely on the sound to find the hidden characters or shapes. Hearing training is performed by concentrating on the sound and moving their finger in this manner.
- The sounds and tracing actions used in hearing training will utilize existing neumo technology. The application documents are reproduced later.
- Further, there is a step where the characters and shapes which have been found by tracing them with a finger are rotated, and a step where quizzes are solved using the found characters and shapes. Specific examples of these steps are shown on the following pages.

### FIG. 3

Reveal characters and complete a phrase: Step (1) Find the character by tracing lines using sound
What the user sees
Task
   - The characters to be traced are broken down into a set of lines, rotated at an arbitrary angle. Rotation is not required.
   - N lines constituting the character are traced in order. All N lines may be traced in order, or simply a few M lines. The lines can be straight or curved, and any shape is acceptable. Multiple lines can also be traced in a single stroke.
   - The characters to be traced are visually hidden, and it is necessary to trace the lines by listening to the sound.
   - During tracing, since the starting point of the line is displayed, tracing starts from that starting point until the end point is reached. Once the end point is reached, the next line tracing problem will begin.
   - The starting point can be a point, or can be something indicating a certain range, such as a circle. The range can also be indicated by a shape other than a circle.
   - The end point can be visually represented by a point or a line, or it can be invisible. The end point can also be found without being displayed.
   - Once tracing is finished, the traced trajectory can be checked. The trajectory may not be displayed during tracing, or the trajectory may be displayed in order during tracing.
   - The correct answer line may be displayed, or may not be displayed before the operation proceeds the next step.
What the user should trace

### FIG. 4

Reveal characters and complete a phrase: Step (2) Rotating the character upright
What the user sees
Task
   - If all of the N lines constituting the character to be traced are not traced, the lines which were not traced will be displayed as the correct answer.
   - Rotate the character using sound to turn it upright. By changing the sound in accordance with the angle at which the character is misaligned from the correct position, the correct angle can be discovered relying on the sound.
   - This step is not required and can be skipped
What the user should trace
Produce sound to indicate that a certain direction is the correct answer

### FIG. 5

Reveal characters and complete a phrase: Step (3) Select what the traced character is
What the user sees
Task
   - Answer what character was traced. There are methods such as selection from multiple choices or answering freely using keyboard input, voice input, handwriting input, etc.
   - When the answer is wrong, there are methods such as allowing only a single answer and allowing multiple answers.
   - When the answer is wrong, the correct answer may or may not be given. If the correct answer is given, the next question will be easier, and thus, this can be used to adjust the difficulty setting.
   - This step is not required and can be skipped
   - Steps (1) to (3) are repeated depending on the number of characters in the question.

### FIG. 6

Reveal characters and complete a phrase: Step (4) Guess the kanji from the obtained characters
What the user sees
Task
   - A quiz is given using the characters found in steps (1) to (3).
   - In the quiz for guessing the reading of the kanji, part of the reading of the kanji will be displayed using the characters found in steps (1) to (3), and the missing characters must be guessed.
   - The kanji whose reading is to be guessed can be a single character, or it can be a phrase made up of multiple characters, four-character idiom, or sentence.
   - The characters found in steps (1) to (3) may be displayed as part of the pronunciation, or may be given as candidates for the answer.
   - For quizzes of guessing a missing character, a list of options can be provided. Alternatively, no options can be provided and free input can be provided.
   - If the answer is correct, a sound or visual will be presented to let the user know that they got the answer right. For example, the sound or visual of fireworks can be presented. Means other than fireworks can also be used. When the answer is wrong, the user will be informed that they got the answer wrong. If the answer is wrong, there are methods such as displaying the correct answer or prompting the user to give another answer.

### FIG. 7

The rotating step can be performed by a different method
- The step of rotating the character or shape found by tracing can be replaced with another method as shown below, or can be omitted. The correct position can be found using sound, which can be used to train hearing. It is also possible to use a method which does not use sound, but relies on visuals or vibrations to find the position.
- Move the character on the screen to align with the correct position. This can be in 1D, 2D, or 3D space. For example, this can be used in cases where it is necessary to place pieces in correct positions, such as a jigsaw puzzle.
   - Enlarge or shrink text and shapes to fit the correct size.
   - Rotate in 3D space around the X-axis or Y-axis to align with the correct position.
   - By flicking characters and shapes with a finger or operating a spring in the manner of pinball to shoot them at the correct target or into a hole. Sound can also be used to help find the correct direction and strength.
   - Find the correct stroke order for kanji and characters. When the stroke order is correct, a correct sound may be played, and when the stroke order is wrong, an incorrect sound may be played.

### FIG. 8

Calculating a score for tracing results
- The step of tracing characters or shapes to find them can also provide a function which numerically quantifies how accurately the user was able to trace and provides feedback to the user. The numerical quantification method can be one of the following methods, or can be another method.
   - Using spatial distance
      ■There is a method to quantify the distance between the correct characters or shapes and the traced line.
         - 1. Convert the traced line into a set of points
         - 2. For each point, calculate the distance to the nearest correct character or shape
         - 3. The calculated distances can be summed to obtain a cumulative difference
         - 4. The calculated average distance can be used to calculate the difference
         - 5. Only the calculated distances which fall within a certain range may be used for calculation. For example, only values close to the correct answer (values less than or equal to 1) can be used as the cumulative value. Alternatively, values distant from the correct answer (values greater than or equal to 10) can be summed and used as a demerit system.
      ■There is a method to quantify the time taken to successfully trace the correct characters and shapes.
         - 1. Define the range of correct characters and shapes. The range of correct answers can be either a binary value of 1 or 0, or a decimal value between 1 and 0, or a gradient range such as 100 to 0.
         - 2. By taking the total tracing time as the denominator and the time spent tracing the correct position as the numerator, the time spent tracing the correct position can be quantified. In this case, the value also be calculated using the gradient defined in 1.
      ■There is a method to quantify the difference between the position where the tracing was completed and the position of the correct end point of the character or shape.
- Instead of using data from the traced path, the distance between the position at the end of tracing and the end point of the correct character or shape can be calculated, and that result can be used as a numerical value for evaluation.
- For the step of rotating characters or shapes, it is also possible to provide a function for quantifying how accurately the user was able to answer and providing feedback to the user.
- The smaller the difference between the correct angle and the answered angle, the higher the score.

### FIG. 9

A variety of patterns can be used for quizzes using characters and shapes found by tracing.
- Though examples of the method of tracing characters have been given, shapes can be used in addition to characters as follows.
   - Japanese hiragana, katakana, kanji, and numbers
   - Alphabet (including language-specific characters other than the basic alphabet, such as French spelling symbols and ligatures, or German umlauts)
   - Characters of other languages (Simplified Chinese, Traditional Chinese, Arabic, Devanagari, Greek, Hangul, etc.)
   - Abstract shapes (circle, triangle, etc.); 1D, 2D, or 3D shapes are acceptable.
   - Line segments in photos or illustrations (any shape which can be expressed with lines, such as anime characters, animal illustrations, icons, products, constellations, family crests and coats of arms, tangrams, and topography of countries and prefectures, can be included)
   - The correct route on a map or in a maze
- There are various ways to create quizzes using the discovered characters and shapes, such as the following.
   - By tracing steps, hiragana, katakana, numbers, alphabet, and other characters of various languages can be found, and the following questions can be presented. The following are merely exemplary, and other questions can be used. Quizzes in which the answer can be found using only the characters found by tracing may be used, or quizzes in which it is necessary to answer with only partial knowledge can be used.
      ■Guess the reading of kanji and compound words
      ■Make a crossword puzzle and guess where the character or word goes
      ■Use the characters found by tracing to find or create kanji, words, or sentences. Rearrange the characters, or find radicals to create kanji. Choose from the *Hyakunin Isshu*.
      ■Fill-in-the-blank quizzes using the characters found by tracing
      ■Calculation problems and number puzzles using numbers found by tracing
      ■Trace the kanji or characters and guess what they are
      ■Trace and find the characters and guess what they stand for
   - Find shapes and illustrations in the tracing steps and ask questions such as the following
      ■A quiz to guess what shape is hidden. All the lines can be traced, or some of the lines, with some of the lines already displayed. Alternatively, only a part of the shape can be displayed, and the whole shape must be guessed. For example, a question to guess an animal or constellation can be created.
      ■Quizzes to guess a correct answer by combining multiple shapes found by tracing.
      ■Jigsaw puzzles, block puzzles, or Tetris, in which the shapes found by tracing are combined can be used.
      ■Compare the size of the shapes found by tracing and find similar shapes.
   - Quizzes to find the correct path on a map or maze by means of the tracing step may be used.
      ■Quizzes to guess a destination on a map or a route to an exit of a maze by tracing a path through the map or maze as a hint.
   - Quizzes on listening to words in a noisy environment by using the characters found by tracing as hints to answer the questions.

### FIG. 10

Elements for enjoying continuing training (1)
- Increase motivation by visualizing tracing accuracy and keeping records
   - Give feedback in numerical form regarding how well the characters and shapes were traced.
   - By recording the characters and shapes traced in the past as history and enabling later review, hearing improvement can be realized.
   - Award badges based on the difficulty and accuracy of tracing. Various badges are available (corresponding to high accuracy, tracing difficult sounds, tracing in a short time, high quiz correct answer rate, etc.) and can be collected. Motivation is increased by showing badges which can easily be acquired next.
- Increase motivation by sharing and communicating with others
   - Enable the sharing of tracing scores and quiz answer screens with others. Results can be shared with other users who have been added as friends within the app, or via email, SNS, LINE^{®}, and other methods outside the app.
   - Increase motivation by notifying when "likes" or comments are received on shared results
- Indicate the difficulty and level of the questions to impart a sense of accomplishment
   - Difficulty is defined by the target sound and distracting sounds used in the tracing steps, enabling level understanding. If precise tracing is achieved, users can advance to a higher level. As a result of hearing training, users can advance in level and feel a sense of accomplishment.
   - For Kanji quizzes, the level of difficulty can be expressed numerically, so that a sense of accomplishment can be felt by, for example, enabling the challenging of questions equivalent to Kanji Kentei Level 4 only once all questions equivalent to Kanji Kentei Level 5 have been cleared. Levels will likewise be defined for other quizzes, such as crossword puzzles.
   - For quizzes involving shapes or illustrations, the difficulty is defined based on the detail of the shapes to be traced and whether the shapes are easy to understand.
- Increase motivation by showing achievement levels as compared to others
   - A ranking is displayed comparing how well you traced the same question with others as a numerical value. There are several types of rankings available, such as rankings by character such as "a," overall rankings for multiple questions, monthly rankings, rankings by difficulty level, rankings by quiz question, and rankings by quiz level
   - Hearing age is displayed by comparing tracing accuracy performance relative to others of the same age and generation.
   - Brain age is displayed by comparing the degree of quiz accuracy relative to others of the same age and generation.

### FIG. 11

Elements for enjoying continuing training (2)
- Awareness of time
   - A time limit can be set for each question to facilitate concentration.
   - A suggested time for solving the problem can be provided.
   - Since tracing too quickly reduces the training effect, the user can be notified of the time and recommended to trace slowly. In this case, messages such as "Take it slower" can be provided along with the time.
   - Efforts can be visualized by displaying the training time for each day.
- Scores can be increased upon consecutive correct answers
- Higher scores can be achieved by training every day.
- When tracing the line nearly correctly, motivational feedback such as "Keep Going!!!" or "Perfect**!" can be given.

### FIG. 12

Improve training effectiveness by setting difficulty in accordance with ability
- By measuring user hearing level in advance using a system separate from this system and incorporating the results as input, questions of an appropriate difficulty for such hearing ability and hearing condition can be presented. By providing questions of an appropriate difficulty matching such ability, training effectiveness can be increased. The following information can be used as input information.
   - Results of pure-tone audiometry
   - Results of speech audiometry
   - Measurement results of hearing ability in noise (listening comprehension tests under steady noise such as digits-in-noise, HINT, J-HINT, OLSA, J-Matrix; alternatively, listening comprehension tests in noisy environments such as digits-in-multi-talker-babble, speech-in-multi-talker-babble, and QuicksIN)
   - Measurement results of the difference in hearing between the left and right ears
   - Measurement results of auditory temporal processing (measurement of threshold using amplitude modulation (AM) detection task, task to measure processing ability of interaural time difference using NOSJT and NOST signals, frequency modulation threshold detection task, gap detection task, TFS 1, TFS 2, TFS-LF, interaural time difference detection task, detection threshold for the direction of frequency modulation of sweep sound)
   - Measurement results of cognitive functions such as working memory and executive function
   - Electroencephalogram (ABR) results
- As user hearing ability improves with continued training, by changing the difficulty in accordance with training results, questions of a level appropriate to such hearing ability and hearing condition can be presented.
   - When tracing accuracy exceeds a level-up threshold, the target sound and distracting sounds will be changed to allow for more difficult training.
   - When tracing accuracy falls below the threshold for level reduction, the target sound and distracting sounds will be changed to allow for less difficult training.
   - The above changes can be determined based on the results of a single training session, judged from the results of multiple consecutive sessions, or judged from the average value of multiple sessions (for example, the average value of one day's training).
- Difficulty level can be set the by taking into account proficiency/inproficiency with the target sound as well as proficiency/inproficiency with distracting sound..
   - Individuals have strengths and weaknesses regarding target sounds, for example, some people are good at hearing changes in the pitch of pure tones but not good at hearing human voices. By setting the level based on target sounds which the user excels at, target sounds for which the user is weak cannot be heard. The overall level will not be raised unless the weak target sound is also cleared to a certain level. Likewise, when there are strengths and weaknesses regarding distracting sounds, the overall level of the distracting sounds will not be further raised unless distracting sounds for which the user is weak reach a certain level.
   - The difference in level between the target sound and the distracting sounds should not be excessive. For example, if the target sound is level 20 and the distracting sounds are level 8, there can be set a constraint that the distracting sounds level must be raised to at least 10 in order to level up the target sound.

### FIG. 13

Other features (1)
- In addition to existing technologies, the following methods can also be used for tracing
   - Use a stylus instead of a finger
   - Use devices or software for detecting gaze to replace the tracing operation with eye movement
   - Detect tracing actions using a device comprising a sensor, such as the Nintendo Switch^{®} controller. Controllers for existing products such as the Meta Quest^{®}, the Apple Vision Pro^{®}, Vive^{®}, Play Station^{®}, XBOX^{®}, and Pico may be used, or controller devices developed specifically this technology may be used
- The following methods may be used to present correct answers
   - When the correct position is traced, a sound is played to indicate a correct answer
   - When the correct position is traced, the device is vibrated
   - When the correct position is traced, some type of visual element is displayed (the screen lights up, a message is displayed, a character is displayed, the screen appears to vibrate, etc.)
   - The intensity and color of the displayed line changes depending on whether the correct position or the incorrect position is traced, facilitating understanding of the correct position
- The following methods may be used to indicate incorrect answers
   - When the wrong position is traced, an incorrect sound is played
   - When the wrong position is traced, the device is vibrated
   - When the wrong position is traced, some type of visual element is displayed (the screen lights up, a message is displayed, a character is displayed, the screen appears to vibrate, etc.)
- Examples of the timing for presenting the correct and incorrect answers can include the following:
   - Display immediately after tracing
   - Display when the correct or incorrect position is traced continuously (for example, when the correct position is traced for 3 seconds)
   - Display the answer when the correct or incorrect position is traced multiple times. For example, nothing will be displayed the first time, but the answer is displayed from the second time onwards. The number of times can be changed to three or four times. It is also possible to display only the second time, and not display again from the third time onwards.
   - The device may be vibrated only when the correct location is passed while tracing and then the same location is returned to, confirming understanding of the correct location
   - Display the correct or incorrect location a few seconds after tracing
   - Display only under certain conditions, such as during bonus stages, fever periods, or when using certain items

### FIG. 14

Other features (2)
- Effects can be added to the tracing action to increase fun
   - A line is drawn on the location of tracing
   - Visual elements are displayed in locations other than the location of tracing (such as characters appearing or moving, pictures being colored, or sparkling visual elements being displayed)
   - Music plays only during tracing, the number of musical instruments in the music being played increases or decreases, and the speed and BPM of the music change
- The tracing action can be performed by drawing lines freely, or by filling in a grid. The grid can be any shape, such as a triangle, square, hexagon, or octagon.

### FIG. 15

Neumo's unique technology (1) Training to adjust the left and right sound positions using head-related transfer function
- Distinguish the location of sound sources in one-, two-, and three-dimensional space using sound.
   - Listen to the direction from which the sound is coming and perform some operation to change the sound so that it appears to be coming from the front. By carefully listening to the location of the sound source and performing the operation, auditory temporal processing can be trained.
   - For example, in one-dimensional situations, a slider is displayed on the smartphone screen, and by operating the slider, the left and right position of the sound is controlled so that it comes from the center. In two-dimensional situations, by tapping the smartphone screen with a finger, the sound source is controlled so that it comes directly from in front by listening to the positions above, below, left and right of the tapped position. In three-dimensional situations, a VR headset is used, or the AR function, gyro (angular velocity) sensor, and magnetic sensor of a smartphone are used to control the sound source so that it comes from directly in front in three-dimensional space.
- Device
   - Any device which can change the position of sound in 1, 2 or 3 dimensions, such as a smartphone, tablet, PC, game console, VR, or real-world speaker, can be used.
   - Stereo speakers, earphones, headphones, or any other device that can produce stereo or 3D sound can be used
- Type of target sound
   - The target sound can be a generated pure tone, sound sweep sound, or spectro-temporally modulated sound, and can be anything, such as FM modulated sound, AM modulated sound, musical instrument sounds, music, human voices, animal sounds, or nature sounds.
   - When using music, using/automatically generating music which balances predictability and uncertainty can stimulate dopamine production and improve learning efficiency.
- Distracting sounds
   - When listening to the target sound, using distracting sounds to mask the target sound can increase difficulty and training effectiveness. Distracting sounds can include white noise, human voices such as speech babble, rain, crowds, music, or other sounds which can interfere with the target sound.
   - To effectively improve hearing in everyday life, fluctuating noise based on a statistical model of fluctuations in volume and acoustic features in actual cafes, bars, etc., may be used

### FIG. 16

Neumo's unique technology (2) Operation while listening to sound
- Examples of the method for operating while listening to the target sound can include the following:
   - Continuously trace across the tablet/smartphone screen to move to a specific point
   - Continuously trace the tablet /smartphone screen to follow a moving target sound and continuously satisfy a target condition.
   - Use an analog joystick on a gamepad to continuously move through a virtual space
   - Use an analog joystick on a touch screen to continuously move through a virtual space
   - A user moves around a physical space by walking
- Operation methods
   - A smartphone is held horizontally and tilted
   - A smartphone is held in a normal manner and tilted
   - A smartphone is held and moved primarily horizontally (search for objects which appear on the screen using AR)
   - An arm is moved while wearing an Apple watch^{®} (such as stroking a parakeet or cat)
   - A VR headset is worn and the neck is turned or the head is tilted
   - Operation using a VR controller
   - Movements such as tai chi and yoga (detect movements by processing camera images)
   - Voice is recorded with a microphone to detect movements of the jaw muscles, tongue, lips, vocal cords, and respiratory muscles
- Operation methods by exercise
   - Hand/arm (finger) movements → Smartphone touch screen
   - Hand/arm movements while holding a smartphone → smartphone angular velocity sensor (gyro)
   - Hand/arm movements while wearing an Apple Watch^{®} → Apple Watch^{®} angular velocity sensor (gyro)
   - Voice (jaw, tongue, lips, vocal cords, respiratory muscle movements) → smartphone microphone
   - Various body movements → movements detected by processing camera images
   - Walking to different locations → movements and location detected by processing camera images
   - Head tilting or turning → motion sensor of VR headset
   - Hand/arm movements → VR controller

### FIG. 17

Neumo's unique technology (3) Explicit delivery of multimodal stimulation
- By combining sound with vibration, multimodal stimulation can be achieved, enhancing training effectiveness
   - In situations where the signal-to-noise ratio between the target sound and the distracting sounds is poor and it is difficult to hear using hearing alone, by converting the target sound into vibration while preserving acoustic features to the greatest extent possible and adding somatosensory sensation, listening ability can be improved through the law of reverse effect and further worsen the signal-to-noise ratio. By boosting listening ability with multimodal stimulation in situations where the signal-to-noise ratio is such that it is impossible to hear using hearing alone, it is possible to train listening in difficult auditory environments and improve learning effects.
   - Vibration stimulation unrelated to the acoustic features of the target sound can also improve listening ability in the same manner as described above through integration with somatosensory stimulation in the auditory pathway. Thus, likewise, it is possible to train listening in aurally difficult environments and improve learning effects.
   - Adding weak noise vibrations can cause stochastic resonance, improving listening ability even in signal-to-noise ratios that make hearing difficult. Thus, likewise, it is possible to train listening in aurally difficult environments and improve learning effects.
   - Methods for converting target sounds into vibrations while preserving as much of the acoustic features as possible include PWM (pulse width modulation) and PAM (pulse amplitude modulation), or a combination of these.
   - Methods for providing vibrational stimuli unrelated to the acoustic features of the target sound include vibrations synchronized with the rhythm of the target sound, vibrations linked to user input, and periodic or random vibrations unrelated to the target sound or user input.

### FIG. 18

Neumo's unique technology (4) Simultaneous meditation and hearing training by drawing circles and shapes while listening to sound
- Though methods of meditation in relaxation is achieved by focusing on deep breathing, by tracing a circle with a finger on a smartphone screen while concentrating on listening to the target sound, meditation and hearing training can be achieved simultaneously.
- The target sound changes in conjunction with the circular movement of your finger. Examples are as follows:
   - When the correct position of a circle is traced with a finger, the correct sound is played, and when the position becomes misaligned, the sound changes to indicate deviation from the circle.
   - The speed of the circle movement is defined, the correct sound is played when moving at the correct speed, and the sound is changed when moving too fast or too slow.
- Circular motion
   - The circle may or may not be displayed and be visible on the screen.
   - A circle can be drawn in space using a VR controller or motion capture equipment.
- The size of the circle may be changed or patterns other than circles may be used
   - The size of the circle can be changed during tracing.
   - Shapes other than circles, such as squares and stars, or characters and pictures can be traced.
- The change in the target sound can be any change as long as correct and incorrect sounds can be distinguished. For example, the following sounds can be used:
   - The correct sound is a sound which comes from the front, and the sound that is out of position comes from a position in 1D, 2D, or 3D space that is shifted from the front, so that it can be distinguished in which direction on the circle the sound is shifted.
   - Correct and incorrect sounds can be distinguished by changing pitch, volume, velocity, sweep sound, rhythm, phonemes, instrument type, etc.
- A guide may be provided
   - When circle tracing errors occur, guidance can be provided by text displayed on the screen or audio.
   - In addition to audio and text, sound effects, blinking screens, character and icon displays, vibrations, etc., may be used as the guide
   - Feedback on the speed of tracing the circle can be given by audio such as "Slow down" or "That's a good pace." It is more effective to train slowly while paying attention to the target sound than to roughly trace the circle.
- Vibration enhances the meditation effect
   - By providing a constant vibration during a task, the entrainment effect can be used to lower the heart rate and enhance the meditative effect. The heart rate of the user can be measured using a smartwatch or smartphone camera, and the vibration can be set to a slightly slower rate than the heart rate. It is also possible to provide vibrations based on the general heart rate without measuring the heart rate.
- Sound effects
   - To prevent boredom from monotony, variety can be added by playing bell sounds, animal cries, nature sounds, music, etc., during tracing
- Distracting sounds
   - By playing constant distracting sounds in addition to the sound linked to the circular movement of the fingers, it becomes difficult to hear, enhancing the training effect.
   - The same distracting sound as in Technology (1) can be used.

### REFERENCE SIGNS LIST

1 information processing device, 2 input part, 3 output part, 4 display part, 5 speaker, 6 communication part, 8 arithmetic part, 9 storage part, 20 server device, 21 arithmetic part, 22 storage part, 23 communication part, D distance, F1 first feedback information, F2 second feedback information, G1 first coordinate, G2 second coordinate, K1 input trajectory, M1 trajectory data, MA information, S information processing system, V input velocity, W network

## Claims

1. An information processing device, comprising:
an arithmetic part for evaluating an input operation of a user, wherein
the arithmetic part:
acquires trajectory data corresponding to a virtual target,
calculates a first coordinate corresponding to the trajectory data,
calculates, based on the input operation of the user, at every predetermined timing, a second coordinate corresponding to an input trajectory which has been input to an input part so as to conform to the trajectory data,
calculates a degree of matching between the first coordinate and the second coordinate, generates, based on audio, first feedback information, an output state of which is adjusted in accordance with the degree of matching, and causes an output part to output the first feedback information, and
when the degree of matching satisfies a predetermined condition, generates second feedback information representing an evaluation of the input operation to the user, and causes the output part to output the second feedback information.

2. The information processing device according to claim 1, wherein the arithmetic part:
imparts a predetermined delay state from a predetermined timing when the input operation is performed and causes the output part to output the second feedback information.

3. The information processing device according to claim 1, wherein the arithmetic part:
calculates, at every predetermined timing, an input state when the input trajectory is input, and
causes the output part to output the second feedback information including information for adjusting the input state based on comparison results of the input state and a set condition.

4. An information processing system, comprising an information processing device for receiving an input operation of a user, and a server device communicatively connected to the information processing device, wherein
at least one of the information processing device and the server device comprises an arithmetic part for evaluating the input operation of the user, and
the arithmetic part:
acquires trajectory data corresponding to a virtual target,
calculates a first coordinate corresponding to the trajectory data,
calculates, based on the input operation of the user, at every predetermined timing, a second coordinate corresponding to an input trajectory which has been input to an input part so as to conform to the trajectory data,
calculates a degree of matching between the first coordinate and the second coordinate,
generates, based on audio, first feedback information, an output state of which is adjusted in accordance with the degree of matching, and causes an output part to output the first feedback information, and
when the degree of matching satisfies a predetermined condition, generates second feedback information representing an evaluation of the input operation to the user, and causes the output part to output the second feedback information.

5. A computer program installed on a computer which is incorporated in an information processing device for evaluating an input operation of a user, which computer program, when executed by the computer, causes the execution of processing to:
acquire trajectory data corresponding to a virtual target,
calculate a first coordinate corresponding to the trajectory data,
calculate, based on the input operation of the user, at every predetermined timing, a second coordinate corresponding to an input trajectory which has been input to an input part so as to conform to the trajectory data,
calculate a degree of matching between the first coordinate and the second coordinate,
generate, based on audio, first feedback information, an output state of which is adjusted in accordance with the degree of matching, and cause an output part to output the first feedback information, and
when the degree of matching satisfies a predetermined condition, generate second feedback information representing an evaluation of the input operation to the user, and cause the output part to output the second feedback information.
